# EUROPEAN PATENT APPLICATION

(11) **EP 3 744 781 A1**
(43) Date of publication of application: **02.12.2020**
(21) Application number: 19425040.3
(22) Date of filing: 29.05.2019
(51) Int. Cl.: C08L 23/02, C08L 23/08, C09D 123/02, C09D 123/08, C09D 5/03, B05D 1/06

(54) **HIGH ADHESION THERMOPLASTIC POWDER COMPOSITION**

(71) Applicant: Laudani, Pietro, 59-700 Boleslawiec (PL); Campione, Sebastiano, 10078 Venaria Reale (TO) (IT)
(72) Inventor: Laudani, Pietro, 59-700 Boleslawiec (PL); Campione, Sebastiano, 10078 Venaria Reale (TO) (IT)
(74) Representative: Bruni, Giovanni

(57) **Abstract**

A thermoplastic powder preparation made of a thermoplastic material based on a mixture of low and medium density polyolefin polymers and an ionomeric resin. The weight percentage of the polyolefin polymer is comprised in a percentage of 1% to 90% and the percentage of the ionomeric resin is comprised in a percentage of 10% to 99%.

## Description

### Technical field of the invention

The present invention is related to a new high adhesion powder thermoplastic preparation suitable for many industrial applications. This preparation is suitably used for to coating any type of material suitable for industrial applications, as for example galvanized or mild steel and aluminum.

### Known art

Numerous thermoplastic preparations for applications on materials for industrial use are known in the state of the art.

In the art however there are not known powder thermoplastic preparations which, once applied, are able at the same time to guarantee a high adhesion and resistance to wear and to impacts as well as having a high softness and elasticity without requiring excessive economic commitment.

### Summary of the invention

Purpose of the present invention is to provide a new powder thermoplastic preparation to be applied onto materials for industrial use, which are able to simultaneously improve and in a consistent way the characteristics of adhesion, anti-shock, anti-scratch, anti-yellowing, as well as thermal characteristics of the treated materials. In particular, the preparation is made of a thermoplastic material based on low and average density polyolefin polymers and an ionomeric resin, i.e. a polymer made of repeated units of electrically neutral units and of ionized units, which are covalently bonded to the polymer skeleton as a unit of the functional group. The ionomeric resin is for example a copolymer of ethylene and methacrylic acid.

Advantageously the thermoplastic preparation according to the invention gives, once applied to the material to be treated, unique physical characteristics such as a high resistance to impacts and corrosion and at the same time an extreme softness. Moreover, this material is resistant to any type of acids and solvents and has a high resistance to chalking.

According to an aspect of the present invention a preparation is described which has the characteristics set forth in the annexed independent product claim.

Further preferred and/or particularly advantageous embodiments of the invention are described according to the characteristics set forth in the annexed dependent claims.

### Detailed description

According to an aspect of the invention the new preparation comprises a thermoplastic material based on a mixture of polymers of low and medium density polyolefins in the form of a fine powder, i.e. with 95% particles with dimensions less than 250µm and density equal to 0,40 g/cm³ and an ionomeric resin also being in the form of a fine powder, with a density equal to 0,97 g/cm³ and a melting temperature of 84°C.

Advantageously, the mixture of polyolefin polymers is free of halogens and VOHC or phthalates, therefore it is a totally "green" mixture.

Moreover, these polyolefin polymers are able to withstand the worst climatic conditions, acids, pulverization and any type of stress cracking. This material also provides a good electrical insulation with excellent resistance to abrasion and impact.

Advantageously, the ionomeric resin, for example a copolymer of ethylene and methacrylic acid, is corrosion resistant by combining impact resistance, abrasion resistance, chemical resistance, resistance to solvents and to all acids and crystalline transparency even on large thicknesses.

The new thermoplastic preparation is made for example of a mixture equal to 80% by weight of the polymer or polyolefin and to 2% by weight of ionomeric resin.

This percentage permits to get the best effect while keeping costs low. In any case, good results are also obtained by using the polyolefin polymer in any percentage by weight from 1% to 9% and the ionomeric resin in any weight percentage from 10% to 99%.

Advantageously, the new thermoplastic preparation is applied to any type of material through the electrostatic spraying system and subsequent baking in oven.

Advantageously, in order to obtain a better effect of adhesion of the thermoplastic preparation, on mild steel, the latter should be pretreated first with cleaning and degreasing. For application on galvanized steel it would be necessary to pre-treat with sandblasting.

The coating provided through the application of the new thermoplastic preparation has a thickness between 150 and 300 µm.

According to a further aspect of the invention, concerning the production process of the new thermoplastic preparation, it consists in firstly mixing the components, according to the percentages indicated above, with colored pigments. Subsequently the mixture is extruded through an extruder. The mixture is then reduced in powder of medium and low density by means of a mill in an atmosphere of nitrogen at a temperature ranging between -40°C and -30°C. The processing within the mill takes place continuously for production of about 200kg/h of product.

Then the process goes on directly or after waiting for the time necessary for cooling, with packaging.

The thermoplastic preparation object of the present invention is packaged in 20 kg plastic bags on 1000 kg pallets.

The thermoplastic preparation is ready to be used, for example, by spray application, on the material to be treated.

In addition to the embodiments of the invention, as described above, it is to be understood that numerous further variants exist. It must also be understood that these modes of implementation are only exemplary and do not limit neither the object of the invention, nor its applications, nor its possible configurations. On the contrary, although the above description makes it possible for an expert in the trade to carry out the present invention at least according to one of its exemplary configurations, it is to be understood that many variants of the described components are conceivable, without thereby escaping from the object of the invention, as defined in the attached claims, when interpreted literally and/or according to their legal equivalents.

## Claims

1. A thermoplastic powder preparation comprising a thermoplastic material based on a mixture of low and medium density polyolefin polymers and an ionomeric resin, **characterized in that** the weight percentage of the polyolefin polymer is comprised in a percentage from 1% to 90% and the percentage of the ionomeric resin is comprised in a percentage from 10 % to 99%.

2. The thermoplastic preparation according to claim 1, **characterized in that** the weight percentage of the polyolefin polymer is equal to 80% and the weight percentage of the ionomeric resin is 20%.

3. The thermoplastic preparation according to claim 1, **characterized in that** said polyolefin polymer has the form of a fine powder, i.e. with 95% particles with dimensions less than 250 µm and a density of 0,40 g/cm^{3.}

4. The thermoplastic preparation according to claim 1, **characterized in that** said ionomeric resin is a copolymer of ethylene and methacrylic acid.

5. The thermoplastic preparation according to claim 1 or 4, **characterized in that** said ionomeric resin has the form of a fine powder with a density of 0,97 g/cm³ and melting temperatures of 84°C.

6. The thermoplastic preparation according to one of the preceding claims, **characterized in that** it forms a coating with a thickness between 250 and 800 µm.

7. An use of the thermoplastic preparation according to any of claims 1 to 6, for spray applications on each type of material to be treated.
